Europäisches Patentamt

European Patent Office

Office européen des brevets

(19)

(11) **EP 1 331 585 A1**

(12) **EUROPEAN PATENT APPLICATION**
published in accordance with Art. 158(3) EPC

(43) Date of publication:
**30.07.2003 Bulletin 2003/31**

(21) Application number: **01974733.6**

(22) Date of filing: **05.10.2001**

(51) Int Cl.⁷: **G06F 17/60**

(86) International application number:
**PCT/JP01/08828**

(87) International publication number:
**WO 02/035412 (02.05.2002 Gazette 2002/18)**

(84) Designated Contracting States:
**AT BE CH CY DE DK ES FI FR GB GR IE IT LI LU MC NL PT SE TR**

(30) Priority: **27.10.2000 JP 2000329320**

(71) Applicant: **TSUBASA SYSTEM CO. LTD.**
**Tokyo 136-0071 (JP)**

(72) Inventor: **NAGATA, Toshitsugu**
**Koutou-ku Tokyo 136-0071 (JP)**

(74) Representative: **Chettle, Adrian John et al**
**Withers & Rogers,**
**Goldings House,**
**2 Hays Lane**
**London SE1 2HW (GB)**

(54) **RECYCLE PARTS UTILIZATION PROMOTING SYSTEM, AND RECYCLE PARTS UTILIZATION PROMOTING METHOD**

(57)    A recycle parts utilization promoting system, and a recycle parts utilization promoting method are intended to make it possible to utilize recycle parts in a suitable manner when a vehicle or the like is repaired. The method comprises the steps of retrieving data on recycle parts corresponding to parts necessary for repair from a recycle database, retrieving data on new parts corresponding to parts necessary for the aforementioned repair from a new parts data base, comparing the data on recycle parts with the data on new parts, and presenting the result of comparison. This makes possible comparison between the case of using new parts and the case of using recycle parts , and makes possible utilization of suitable parts, thus promoting utilization of recycle parts.

*FIG. 1*

**Description**

Technical Field

The present invention relates to a recycle parts utilization promoting system and a recycle parts utilization promoting method that enable recycle parts to be properly utilized when repairing a vehicle, etc..

Background Arts

Over the recent years, there has been an increasing demand for recycle parts such as used parts rebuilt parts in repairing a vehicle, etc. in terms of recycling. Note that the used parts are reusable parts undergoing inspections and cleaning, and the rebuilt parts are parts having almost the same quality as new parts by repairing the used parts and repainting them in this application.

The recycle parts, even if being the same parts, however, have scatters in prices and qualities, and therefore the price and the quality of every part must be confirmed. Further, parts suppliers are different in many cases , and hence an ordering operation is troublesome.

Moreover, if the parts supplier is different, a deliveryperiod, a delivery fee, etc. become also different, and it is therefore difficult to recognize which part is optimal to its utilization simply by comparing parts prices with each other.

Accordingly, it is an object of the present invention, which was devised under such circumstances, to provide a recycle parts utilization promoting system and a recycle parts utilization promoting method capable of utilizing proper parts by comparing new parts data with recycle parts data, and scheming to promote the utilization of the recycle parts.

Disclosure of the Invention

In a recycle parts utilization promoting system and a recycle parts utilization promoting method according to the present invention, recycle parts data such as a delivery fee, a delivery period, a repair history, etc. are compared with new parts data, and a result of this comparison is displayed. This scheme makes it possible to clearly compare a case of performing a repair by use of the recycle parts with a case of performing the repair by use of the new parts, thereby scheming to promote the utilization of the recycle parts by making it feasible to properly judge whether the recycle parts are utilized or not.

Further, procedures are simplified by giving an order of the parts and paying prices of the parts on the basis of the recycle parts data.

Brief Description of the Drawings

FIG. 1 is ablock diagram showing a whole architecture of a recycle parts utilization promoting system of the present invention;
FIG. 2 is a diagram showing an architecture of a computer configuring a part of this system;
FIG. 3 is an explanatory diagram of a used car distribution system;
FIG. 4 is an explanatory flowchart of a recycle parts utilization promoting method of the present invention;
FIG. 5 is a diagram showing a display example of a compared result;
FIG. 6 is an explanatory diagram of a state where the parts are selected; and
FIG. 7 is an explanatory flowchart of the recycle parts utilization promoting method of the present invention; and

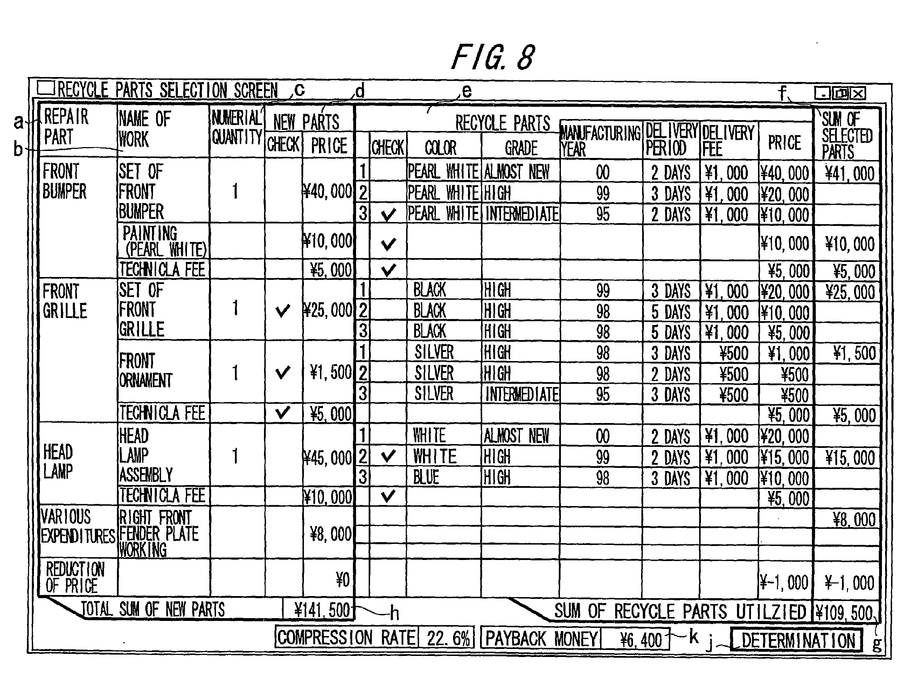

FIG. 8 is a diagram showing a display example of a compared result.

Best Mode for Carrying out the Invention

Embodiments of the present invention will hereinafter be described together with illustrated examples.

<Embodiment 1>

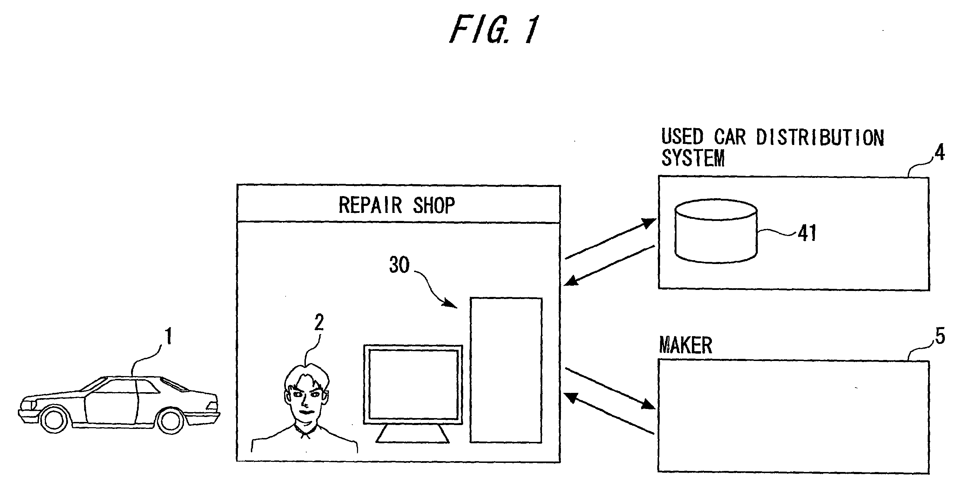

FIG. 1 is a block diagram showing a whole architecture of a recycle parts utilization promoting system of the present invention.

In the recycle parts utilization promoting system in this embodiment, there are explained a used car distribution system 4 in which an owner 2 of a vehicle 1 requests a repair shop 3 to repair the vehicle 1, and the repair shop 3 supplies recycle parts, and also a case where the repair is conducted by use of parts supplied from a maker 5 that supplies new parts.

The used car distribution system 4 is a network system configured so that a first storage means (a recycle parts database) 41 is stored with data of the recycle parts possessed respectively by a plurality of parts suppliers as will be described later on, and a demander searches for batchwise the data of the recycle parts among the plurality of parts suppliers and thus can utilize the parts.

The maker 5 supplies the vehicle 1 and vehicle parts (new genuine parts). FIG. 1 illustrates the used car distribution system 4 and the maker 5 one by one, however, transactions may be made among a plurality of used car distributions systems 4 and a plurality of makers 5.

The repair shop 3 is equipped with a personal computer 30 configuring one element of this system.

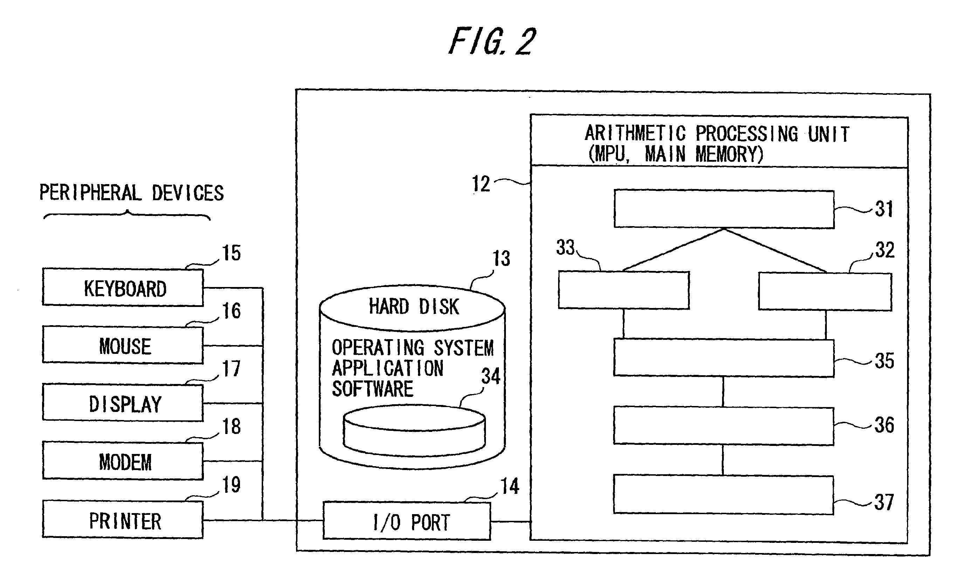

FIG. 2 is a schematic diagram of the personal computer 30, wherein a main body 11 includes an arithmetic processing unit 12 constructed of an MPU (Micro Processor Unit), a main memory, etc., a hard disk (solid-state magnetic storage device) 13 stored with software for arithmetic processing, an input/output port 14 defined as an input/output unit of the data of the arithmetic processing unit 12 and on the hard disk 13, and so on.

Further, peripheral devices such as a keyboard 15, a mouse 16, a display (displaying means) 17, a modem 18, a printer19, etc. are connected via the I/O port 14 to the main body 11.

An operating system (OS) and application software are installed into the hard disk 13 of the main body 11. Moreover, a new parts database 34 defined as a second storage means stored with pieces of information about parts (new parts) of the maker 5, is configured on the hard disk 13.

The arithmetic processing unit 12 processes, based on the application software, the information given from the peripheral devices and the new parts database 34, thereby actualizing functions of a parts designating means 31, a first searching means 32, a second searching means 33, a comparing means 35, an ordering means 37 and a payment means 38.

The function of the parts designating means 31 is to specify a type of a utilized car using the parts necessary for the repair and a parts number through inputs from the keyboard 15 and from the mouse 16, temporarily store the parts information on the hard disk 13, and provide other means with the same information.

Further, the function of the first searching means (recycle data searching means) 32 is to search the recycle database 41 for the data about the recycle parts corresponding to the parts required.

The function of the second searching means (new parts data searching means) 33 is to search the new parts database 34 for the data about new parts corresponding to the parts required.

The function of the comparing means 35 is to calculate a repair cost in the case of repairing by using only the new parts on the basis of the recycle parts data searched for by the recycle data searching means 32 and the new parts data searched for by the new parts data searching means 33 and a repair cost in the case of at least partially using the recycle parts, sort out pieces of information on the repair costs, grades, a delivery period, etc. in a table format, and display the table in away that compares the new parts with the recycle parts on the display 17.

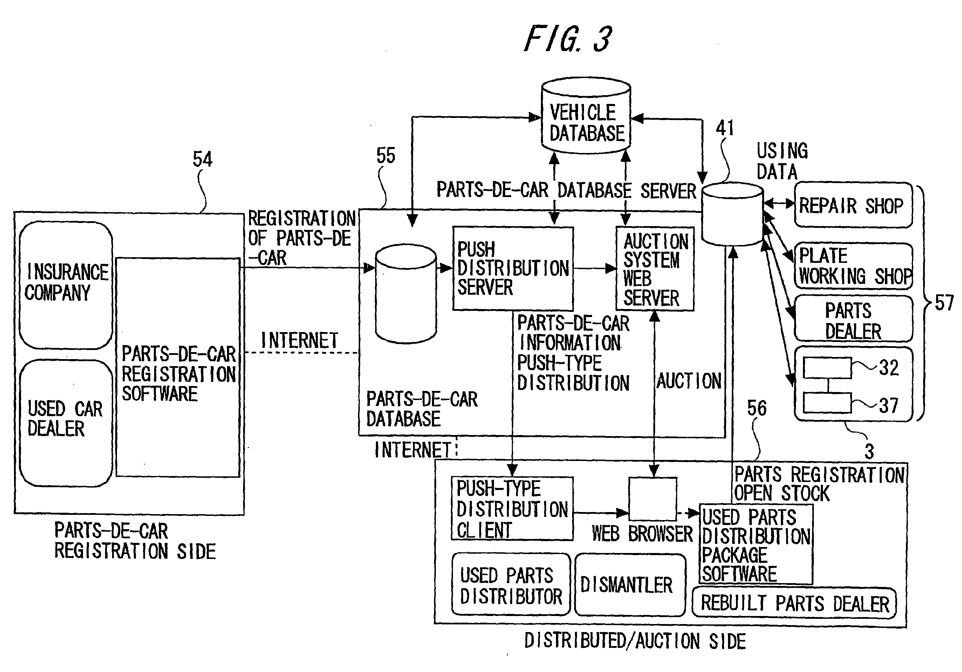

In the used car distribution system 4, as shown in FIG. 3, a parts-de-car registrant 54 registers a parts-de-car to be sold to a main server 55. Then, a dismantler defined as a parts supplier 56 purchases the parts-de-car on the basis of information on this registration, dismantles the parts-de-car, and registers pieces of data of the used parts available for sale in a recycle parts database 41. Further, a rebuilder defined as a parts supplier 56 purchases the used parts and the parts-de-car, manufactures rebuilt parts by rebuilding the used parts, and registers data on the rebuilt parts on the recycle parts database 41. A used parts user 57 of the repair shop 3, etc. gives an order of the recycle parts to each parts supplier 56.

This recycle parts database 41 is stored with, as pieces of recycle parts data, a type of the car utilizing the used parts, a year model, a color, a parts number, a grade, a price, a delivery period, a repair history, a quantity of stock, a technical fee (such as fitting fee, etc.) , a painting cost, a name of the supplier, an ordered party, and a recipient of payment. Note that the grade shows a state of the parts such as damaged or undamaged parts, a degree of deterioration of the painting and so on, wherein the parts are ranked such as almost new, a high grade, an intermediate grade, and a low grade sequentially from the high down to the low. Further, the repair history shows a history of repairs of a plate, repainting, etc., and a history of rebuilding the parts into rebuilt parts and indicating what kind of parts are replaced with.

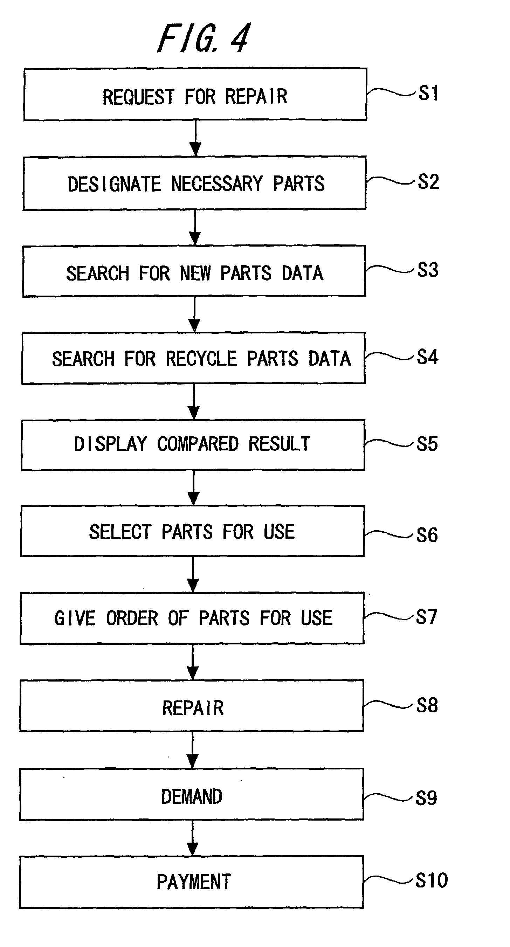

FIG. 4 is an explanatory diagram of a method (a recycle parts utilization promoting method) for repairing the vehicle by use of the recycle parts utilization promoting system in this example.

In the case of repairing the vehicle 1, the owner 2 of the repairing object requests the repair shop 3 to repair it with this purport (step 1, which will hereinafter be abbreviated such as S1).

The repair shop 3 lists up the parts required for repairing and designates the necessary parts by inputting parts numbers , etc . through the keyboard 15 to the personal computer 30 (S2).

This computer 30 searches, with respect to the parts inputted, the new parts database 34 for prices of the new parts, a delivery period, a technical fee (fitting cost, etc.) , a painting cost, an ordered party, a recipient of payment and so on (S3).

Similarly, the data on the recycle parts described above are searched for from the recycle parts database 41, wherein the type of the utilized car and the parts numbers of the necessary parts are used as keywords (S4).

Then, the new parts data are compared with the recycle parts data on the basis of the parts data searched for, and a comparison is displayed on the display 17 (S5).

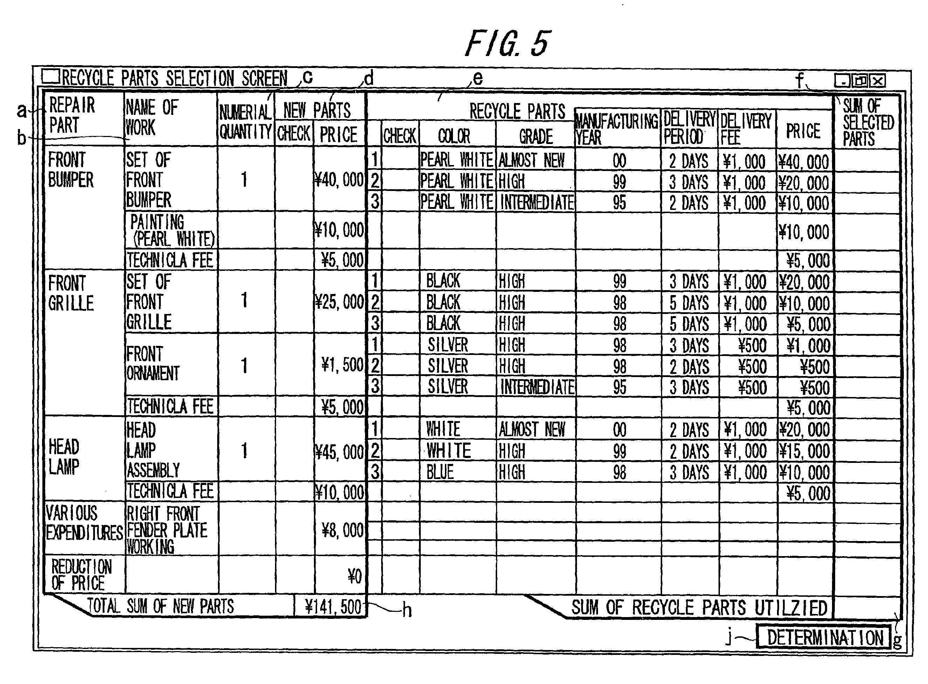

Displayed at this time on the display 17, as shown in FIG. 5, are a "repaired part" field **a**, a "parts/work name" field **b** and a "numerical quantity" field **c**, which indicate items such as the repaired part, the parts necessary for repairing, a technical fee for fitting the parts, a work such as painting, etc. and a numerical quantity of the parts that have been inputted from a parts designating means 31.

Further, a "new parts" field **d** indicates a price including a delivery fee as the new parts data of the necessary parts and work, and a "recycle parts" field **e** indicates a color, a grade, a manufacturing year, a delivery period, a delivery cost and a price.

Note that the recycle parts data are displayed by every three categories as candidates data different in price and grade among pieces of the data searched for, however, the data indicating an arbitrary numerical number without being limited thereto, and next candidates may also displayed properly.

Moreover, the recycle parts data are, in addition, contain a parts repair history and a supplier name that can be referred to.

Thus, in the comparison between the new parts and the recycle parts, the user (the owner 2 of the repair-requested party) selects the parts on the basis of the grades, the prices, etc. of the recycle parts (S6).

For example, in the case of utilizing a substitute car during a period of repairing, if the delivery period of the recycle parts is longer than the new parts, a cost for the substitute car increases corresponding to this longer period of time. The cost being high, the recycle parts showing a shorter period up to the delivery period are selected. Further, the parts, if rebuilt, are selected in consideration of what kinds of parts are replaced for rebuilding the parts in a way that refers to a repair history thereof.

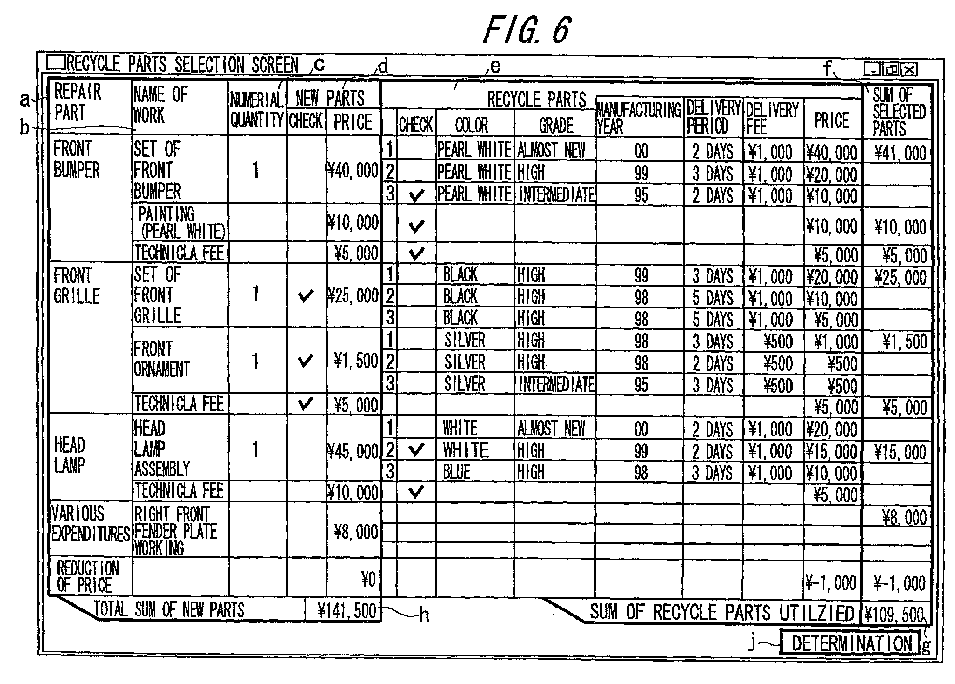

The parts selection is made by clicking and checking a check box of the new parts or the recycle parts by use of a pointing device. FIG. 6 shows a case in which the recycle parts are selected for a front bumper and a headlamp, and a new part is selected for a front grille.

Note that the parts meeting conditions set with respect to the price, the grade, etc. maybe automatically selected as well as directly selecting the respective parts. For example, the condition may be set to [price first], whereby the apart having a minimum total sum of the delivery cost and the price is selected. The condition may be set to [grade first], whereby a part having the highest grade is selected. The condition may be set to [the same manufacturing year], whereby the part conceived to have substantially the same grade and manufactured the same year, is selected. Further, these conditions are combined, and the part exhibiting the least price among the parts having the high grade is selected, and so forth.

In the case of selecting the parts, sums of money are displayed in a "selected parts price" field **f**, and a total sum is displayed in a "recycle parts utilization sum" field **g**. Note that if various expenditures such as a cost for the plate working, etc. are needed and if a delivery fee is discounted, such a value is added to or subtracted from the total sum. Then, this recycle parts utilization sum is compared with a new parts total sum **h**, and, if necessary for changing the selection of the parts, the check box is again clicked for an off-check, thus reselecting the parts.

Then, if the selection is determined, a determination button **j** is pressed (clicked). If the selected parts are new parts, an order is given to the maker 5 on the basis of the new parts data by an e-mail or FAX, and, in the case of the recycle parts, the order is given likewise to the dismantler or the rebuilder as the supplier of the recycle parts on the basis of the recycle parts data (S7).

The repair shop 3 makes a repair after the parts have arrived (S8), and, after a completion of the repair, demands the owner 2 of a repair fee (S9). In response to this demand, the owner 2 pays the repair fee to the repair shop 3.

Then, the repair shop 3, based on a piece of recipient-of-payment information of the parts data utilized, pays the price of the parts to the maker 5 or the dismantler or the rebuilder (S10).

Thus, according to this embodiment, the parts can be selected in a way that compares the recycle parts data with the new parts data, and it is possible to properly utilize the recycle parts.

Further, in the case of utilizing the recycle parts, one single supplier does not necessarily possess all the parts required, and the parts are ordered from the plurality of suppliers in great majority of cases. Therefore, the delivery fee, the ordered party and the recipient of payment are different for every part, with the result that a business procedure is complicated. This procedure can be, however, simplified by ordering, paying, etc. in a way that utilizes the information about the ordered party and the recipient of payment in the data (the recycle parts data or the new parts data) of the parts utilized. Accordingly, the recycle parts are easy to utilize, and the utilization thereof is promoted.

<Embodiment 2>

A different point of an embodiment 2 from the preceding embodiment is that some proportion of the sum is paid back in the case of utilizing the recycle parts. Note that other configurations are substantially the same, and hence the repetitive explanations are omitted by marking the same elements with the same symbols and so on.

For instance, in the case of repairing by applying a car insurance, insurance money to be paid from an insurance company is calculated on the premise that the repair is done generally by utilizing the new parts, and, if a difference in amount of money occurs due to utilizing the recycle parts, and some proportion of this difference in amount of money is paid back to the vehicle owner.

FIG. 6 is an explanatory diagram showing a method of repairing the vehicle (the recycle parts utilization promoting method) by use of the recycle parts utilization promoting system in this embodiment.

If the vehicle 1 is damaged and repaired by applying an insurance, a contractor (an owner of an object insured) 2 informs the insurance company of this repair and requests the repair shop 3 to repair it (S11).

The repair shop 3 lists up the parts required for repairing and designates the necessary parts by inputting parts numbers , etc . through the keyboard 15 to the personal computer 30 (S12).

This computer 30 searches, with respect to the parts required, the new parts database 34 for prices of the new parts, a delivery period, a technical fee (fitting cost, etc.) , a painting cost, an ordered party, a recipient of payment and so on, wherein a type of the utilized car and the parts numbers are used as keywords (S13).

Similarly, the data on the recycle parts described above are searched for from the recycle parts database 41, wherein the type of the utilized car and the parts numbers of the necessary parts are used as keywords (S14).

Then, the newparts data are compared with the recycle parts data on the basis of the parts data searched for, and a comparison is displayed on the display 17 (315).

At this time, the same items as those in FIG. 4 are displayed on the display 17 , and the user selects the parts for use (S16).

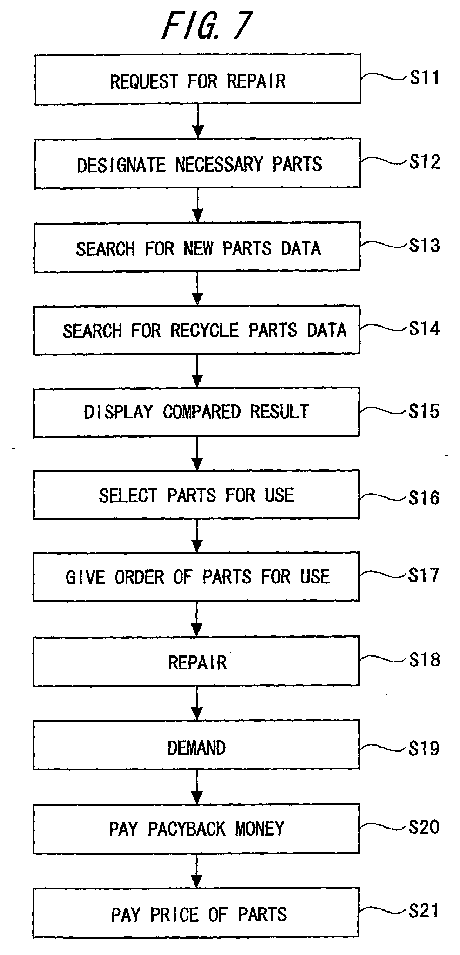

When all the parts for use are selected and the recycle parts are selected, as shown in FIG. 7, an amount of payback money **k** is calculated corresponding to a difference between a recycle parts utilization sum and a new parts total sum.

Then, the user confirms this recycle parts utilization sum, the payback money, etc., and reselects the parts according to the necessity. When the selection is determined, the determination button **j** is pressed.

At this time, the computer 30 gives the order of the selected parts to each supplier and the maker 5 (S17) .

The repair shop 3 makes a repair by use of the selected parts and, after a completion of the repair, demands an amount of money as a repair fee of the insurance company, into which the payback money is added to the recycle utilization sum.

In response to this demand, the insurance company pays the repair fee (insurance money) to the repair shop 3, and then the computer 30 pays the payback money to the owner 2 of the vehicle 1 (S20).

Further, the cost for the parts is paid to the maker 5 and each parts supplier 56 on the basis of the recipient-of-payment information of the new parts data and the recycle parts data (S21).

Note that the payback money is calculated, wherein a predetermined rate of the amount difference occurred from the recycle parts is applied to the amount of payback money, and this rate may be arbitrarily set. In particular, it is preferable that the calculation be made at a different rate corresponding to a magnitude of the amount difference.

For instance, a compression rate is obtained such as:

A Compression Rate = Amount Difference/New Parts Total Sum X 100

(1) when equal to or larger than a compression rate of 50%... 30% of the compressed sum shall be set as an amount of payback money;
(2) when equal to or larger than a compression rate of 5% and less than 50%... 20% of the compressed sum shall be set as the amount of payback money; and
(3) when equal to or smaller than the compression rate of 5%... no payback money shall be paid.

Table 1 shows an example of these numerical values.

Table 1

|  | Example (1) | Example (2) | Example (2) | Example (3) | Example (3) |
|---|---|---|---|---|---|
| New Parts Total Sum | 500,000 | 500,000 | 500,000 | 500,000 | 500,000 |

Table 1   (continued)

|  | Example (1) | Example (2) | Example (2) | Example (3) | Example (3) |
|---|---|---|---|---|---|
| Recycle Parts Utilization Sum | 200,000 | 400,000 | 450,000 | 475,000 | 495,000 |
| Compression Rate | 60% | 20% | 10% | 5% | 1% |
| Payback Money | 90,000 | 20,000 | 10,000 | 0 | 0 |

At this time, an amount of reduction of the payment of the insurance company is given as Table 2 shows.

Table 2

|  | Example (1) | Example (2) | Example (2) | Example (3) | Example (3) |
|---|---|---|---|---|---|
| Amount Difference | 300,000 | 100,000 | 50,000 | 25,000 | 5,000 |
| Payback Money | 90,000 | 20,000 | 10,000 | 0 | 0 |
| Total | 290,000 | 420,000 | 460,000 | 475,000 | 495,000 |
| Sum of Reducti on of Payment | 210,000 | 80,000 | 40,000 | 25,000 | 5,000 |

Note that a person responsible for an accident may often be the owner of the object insured in the case of the car insurance, there might be a case in which it is improper that a great amount of payback money be paid, and hence, in this case, an upper limit may be given to the payback money.

For example, the payback money shall be set to 50,000 yen in every case or shall not exceed an annual insurance contract fee.

In this case, an amount of money exceeding the upper limit may be appropriated to a variety of other expenditures such as a cost for a wrecker, a cost for the substitute car, an exemption sum, etc..

Further, this embodiment may be applied to a general type of cash-back without being confined to the payback of some proportion of the insurance fee.

For instance, there has hitherto been a sales method of giving a cash-back of some amount of purchase money to a consumer who purchased during a campaign period designated. Namely, the cash-back of 100,000 yen is given to a person who purchased a vehicle priced at 1,000,000 yen during the campaign period. This type of sales method enables a promotion of purchases substantially at a cheap price, a rise in purchase demand of the consumers and an expansion of sales routes on one hand, and makes it possible to sell the vehicle priced substantially high through the expanded routes without giving an impression of increasing the price even if the same vehicle is sold at 1,000,000 yen after an end of the campaign on the other hand.

Such being the case, if a trade-in car, etc. is repaired at the repair shop 3 and sold as a used car, a sales price of the used car is set by adding a cost for the repair using the new parts to the price of the trade-in car, etc., and some proportion of a difference amount occurred from using the recycle parts on the occasion of the actual repair is calculated as an amount of cash-back money (payback money).

Then, the trade-in car, after being repaired, sold at the sales price described above, and a cash-back is given to the consumer who purchased during a predetermined period. Further, the trade-in car is sold at the same sales price after an elapse of the predetermined period, and the payback money is appropriated to a cost for managing the vehicle, and so on.

As discussed above, according to this embodiment, the parts can be selected in a way that compares the recycle parts data with the new parts data, the proper utilization of the recycle parts can be facilitated, and the procedures such as giving the order and making the payment, etc. can be simplified, whereby the utilization of the recycle parts can be promoted.

Moreover, there is an increased merit of utilizing the recycle parts such as the payment of the payback money, and hence there is a consumer' s strong demand for utilizing the recycle parts, thereby making it possible to promote the utilize the recycle parts.

<Other Embodiments>

[1] : A recycle parts utilization promoting system according to the present invention comprises a first storage means for storing data about recycle parts, a second storage means for storing data about new parts, a parts designating means for designating parts necessary for repairing, a first searching means for searching the first storage means for the data of the recycle parts corresponding to the parts designated by the parts designating means, a second searching means for searching the second storage means for the data of the new parts corresponding to the parts designated by the parts designating means, a comparing means for comparing the recycle parts data searched for by the first searching means with the new parts data searched for by the second searching means, and a displaying means for displaying a result of the comparison made by the comparing means.

There is provided the recycle parts utilization promoting system capable of, with this configuration, properly utilizing the recycle parts and promoting the utilization of the recycle parts.

[2]: In the recycle parts utilization promoting system described in the above item [1], the recycle parts data and the new parts data contain at least one of a type of a utilized car, a parts number, a price, a delivery fee, a delivery period, a repair history, a grade and a stock quantity.

With this scheme, the parts data can be searched for by use of the type of the utilized car and the parts number, and the recycle parts can be utilized in consideration of the price, the delivery fee, the delivery period, the repair history, etc..

[3]: In the recycle parts utilization promoting system described in the above item [1] or [2] , the comparing means calculates a repair cost in the case of utilizing the recycle parts on the basis of the recycle parts data searched for by the first searching means, calculates a repair cost in the case of utilizing the new parts on the basis of the new parts data searched for by the second searching means, obtains a difference amount between the repair cost in the case of utilizing the recycle parts and the repair cost in the case of utilizing the new parts, and calculates a predetermined rate of the difference amount as an amount of payback money.

With this scheme, a merit of utilizing the recycle parts is increased, thereby promoting the utilization of the recycle parts.

[4] : The recycle parts utilization promoting system described in the above item [3] further comprises a paying means for paying the payback money calculated by the comparing means.

With this scheme, the merit of utilizing the recycle parts is increased, thereby promoting the utilization of the recycle parts.

[5]: In the recycle parts utilization promoting system described in any one of the above items [1] through [4] , the recycle parts data contain a piece of information about an ordered party of the recycle parts, and this recycle parts utilization promoting system further comprises an ordering means for giving an order of the recycle parts on the basis of the recycle parts data if a user selects utilizing the recycle parts on the basis of the compared result displayed on the displaying means.

This scheme simplifies an ordering procedure of the recycle parts.

[6]: In the recycle parts utilization promoting system described in any one of the above items [1] through [5] , the recycle parts data contain a piece of information about a recipient of payment of the recycle parts, and this recycle parts utilization promoting system further comprises a paying means for paying a price of the recycle parts to the recipient of payment on the basis of the recycle parts data if the user selects utilizing the recycle parts on the basis of the compared result displayed on the displaying means.

This scheme simplifies a payment procedure of the recycle parts.

[7] : A recycle parts utilization promoting method according to the present invention comprises a first step of designating parts necessary for repairing, a second step of searching a first storage means stored with recycle parts data for the data about the recycle parts corresponding to the parts designated, a third step of searching a second storage means stored with new parts data for the data about the new parts corresponding to the parts designated, a fourth step of comparing the recycle parts data searched for in the second step with the new parts data searched for in the third step, and a fifth step of displaying a result of the comparison made in the fourth step.

With this scheme, the recycle parts can be properly utilized, thereby promoting the utilization of the recycle parts.

[8] : The recycle parts utilization promoting method described in the above item [7] further comprises a sixth step of searching for the recycle parts data containing at least the information about the ordered party in the second step, and giving an order of the recycle parts on the basis of the recycle parts data if a user selects utilizing the recycle parts on the basis of the compared result displayed in the fifth step.

This scheme simplifies an ordering procedure of the recycle parts.

[9] : The recycle parts utilization promoting method described in the above item [7] or [8] further comprises a seventh step of searching for the recycle parts data containing at least the information about the recipient of payment in the second step, and paying a price of the recycle parts to the recipient of payment on the basis of the recycle parts data if the user selects utilizing the recycle parts on the basis of the compared result displayed in the fifth step.

This scheme simplifies a payment procedure of the recycle parts.

Note that the recycle parts utilization promoting system and the recycle parts utilization promoting method according to the present invention are not limited to the illustrated examples described above, and, as a matter of course, a variety of changes may be added within the range that does not deviate from the gist of the present invention.

The "repair" in the present invention is to include a case where the object is replaced other product (which partially used the recycle parts or is a secondhand product) due to full damages thereof, etc..

Industrial Applicability

As discussed above, according to the present invention, on the occasion of repairing and manufacturing the object, the case of using the new parts can be compared with the case using the recycle parts , whereby the judgment as to the parts to be utilized is properly made. Hence, if the case utilizing the recycle parts is more advantageous, this merit is clarified, whereby the utilization of the recycle parts can be promoted by restraining the new parts from being uniformly utilized. It can be said from the above that the present invention has high values of the utilization.

Further, the recycle parts utilization promoting method and the recycle parts utilization promoting method according to the present invention can be applied to repairing (replacing and manufacturing) cameras, personal computers, electrical appliances, and so on.

**Claims**

1. A recycle parts utilization promoting system comprising:

   first storage means for storing data about recycle parts;
   second storage means for storing data about new parts;
   parts designating means for designating parts necessary for repairing;
   first searching means for searching said first storage means for the data of the recycle parts corresponding to the parts designated by said parts designating means;
   second searching means for searching said second storage means for the data of the new parts corresponding to the parts designated by said parts designating means ;
   comparing means for comparing the recycle parts data searched for by said first searching means with the new parts data searched for by said second searching means; and
   displaying means for displaying a result of the comparison made by said comparing means.

2. A recycle parts utilization promoting system according to claim 1, wherein the recycle parts data and the new parts data contain at least one of a type of a utilized car, a parts number, a price, a delivery fee, a delivery period, a repair history, a grade and a stock quantity.

3. A recycle parts utilization promoting system according to any one of claims 1 and 2, wherein said comparing means calculates a repair cost in the case of utilizing the recycle parts on the basis of the recycle parts data searched for by said first searching means, calculates a repair cost in the case of utilizing the new parts on the basis of the new parts data searched for by said second searching means, obtains a difference amount between the repair cost in the case of utilizing the recycle parts and the repair cost in the case of utilizing the new parts, and calculates a predetermined rate of the difference amount as an amount of payback money.

4. A recycle parts utilization promoting system according to claim 3, further comprising paying means for paying the payback money calculated by said comparing means.

5. A recycle parts utilization promoting system according to any one of claims 1 through 4, the recycle parts data containing a piece of information about an ordered party of the recycle parts, further comprising ordering means for giving an order of the recycle parts on the basis of the recycle parts data if a user selects utilizing the recycle parts on the basis of the compared result displayed on said displaying means.

6. A recycle parts utilization promoting system according to any one of claims 1 through 5, the recycle parts data containing a piece of information about a recipient of payment of the recycle parts, further comprising paying means for paying a price of the recycle parts to the recipient of payment on the basis of the recycle parts data if the user selects utilizing the recycle parts on the basis of the compared result displayed on said displaying means.

7. A recycle parts utilization promoting method comprising:

a first step of designating parts necessary for repairing;

a second step of searching first storage means stored with recycle parts data for the data about the recycle parts corresponding to the parts designated;

a third step of searching second storage means stored with new parts data for the data about the new parts corresponding to the parts designated;

a fourth step of comparing the recycle parts data searched for in said second step with the new parts data searched for in said third step; and

a fifth step of displaying a result of the comparison made in said comparing means.

8. A recycle parts utilization promoting method according to claim 7, further comprising a sixth step of searching for the recycle parts data containing at least the information about the ordered party in said second step, and giving an order of the recycle parts on the basis of the recycle parts data if a user selects utilizing the recycle parts on the basis of the compared result displayed in said fifth step.

9. A recycle parts utilization promoting method according to any one of claims 7 and 8, further comprising a seventh step of searching for the recycle parts data containing at least the information about the recipient of payment in said second step, and paying a price of the recycle parts to the recipient of payment on the basis of the recycle parts data if the user selects utilizing the recycle parts on the basis of the compared result displayed in said fifth step.

# FIG. 1

REPAIR SHOP

USED CAR DISTRIBUTION SYSTEM 4

41

MAKER 5

EP 1 331 585 A1

# FIG. 2

PERIPHERAL DEVICES

- 15 KEYBOARD
- 16 MOUSE
- 17 DISPLAY
- 18 MODEM
- 19 PRINTER

12 ARITHMETIC PROCESSING UNIT (MPU, MAIN MEMORY)

- 31
- 32
- 33
- 35
- 36
- 37

13 HARD DISK
34 OPERATING SYSTEM
APPLICATION SOFTWARE

14 I/O PORT

## FIG. 3

**PARTS-DE-CAR REGISTRATION SIDE** (54)

- INSURANCE COMPANY
- USED CAR DEALER
- PARTS-DE-CAR REGISTRATION SOFTWARE

REGISTRATION OF PARTS-DE-CAR

INTERNET

**PARTS-DE-CAR DATABASE SERVER** (55)

- VEHICLE DATABASE
- PARTS-DE-CAR DATABASE
- PUSH DISTRIBUTION SERVER
- AUCTION SYSTEM WEB SERVER

PARTS-DE-CAR INFORMATION PUSH-TYPE DISTRIBUTION

AUCTION

INTERNET

**DISTRIBUTED/AUCTION SIDE** (56)

- PUSH-TYPE DISTRIBUTION CLIENT
- WEB BROWSER
- USED PARTS DISTRIBUTION PACKAGE SOFTWARE
- USED PARTS DISTRIBUTOR
- DISMANTLER
- REBUILT PARTS DEALER

PARTS REGISTRATION OPEN STOCK

USING DATA (41)

**(57)**
- REPAIR SHOP
- PLATE WORKING SHOP
- PARTS DEALER
- 32
- 37

3

EP 1 331 585 A1

# FIG. 4

```
┌─────────────────────────────────────┐
│       REQUEST  FOR  REPAIR           │──── S1
└─────────────────────────────────────┘
                  │
                  ▼
┌─────────────────────────────────────┐
│    DESIGNATE  NECESSARY  PARTS       │──── S2
└─────────────────────────────────────┘
                  │
                  ▼
┌─────────────────────────────────────┐
│    SEARCH  FOR  NEW  PARTS  DATA     │──── S3
└─────────────────────────────────────┘
                  │
                  ▼
┌─────────────────────────────────────┐
│  SEARCH  FOR  RECYCLE  PARTS  DATA   │──── S4
└─────────────────────────────────────┘
                  │
                  ▼
┌─────────────────────────────────────┐
│     DISPLAY  COMPARED  RESULT        │──── S5
└─────────────────────────────────────┘
                  │
                  ▼
┌─────────────────────────────────────┐
│       SELECT  PARTS  FOR  USE        │──── S6
└─────────────────────────────────────┘
                  │
                  ▼
┌─────────────────────────────────────┐
│   GIVE  ORDER  OF  PARTS  FOR  USE   │──── S7
└─────────────────────────────────────┘
                  │
                  ▼
┌─────────────────────────────────────┐
│             REPAIR                   │──── S8
└─────────────────────────────────────┘
                  │
                  ▼
┌─────────────────────────────────────┐
│             DEMAND                   │──── S9
└─────────────────────────────────────┘
                  │
                  ▼
┌─────────────────────────────────────┐
│             PAYMENT                  │──── S10
└─────────────────────────────────────┘
```

## FIG. 5

| REPAIR PART | NAME OF WORK | NUMERICAL QUANTITY | NEW PARTS | | RECYCLE PARTS | | | | | | | | SUM OF SELECTED PARTS |
|---|---|---|---|---|---|---|---|---|---|---|---|---|---|
| | | | CHECK | PRICE | | CHECK | COLOR | GRADE | MANUFACTURING YEAR | DELIVERY PERIOD | DELIVERY FEE | PRICE | |
| FRONT BUMPER | SET OF FRONT BUMPER | 1 | | ¥40,000 | 1 | | PEARL WHITE | ALMOST NEW | 00 | 2 DAYS | ¥1,000 | ¥40,000 | |
| | | | | | 2 | | PEARL WHITE | HIGH | 99 | 3 DAYS | ¥1,000 | ¥20,000 | |
| | | | | | 3 | | PEARL WHITE | INTERMEDIATE | 95 | 2 DAYS | ¥1,000 | ¥10,000 | |
| | PAINTING (PEARL WHITE) | | | ¥10,000 | | | | | | | | ¥10,000 | |
| | TECHNICLA FEE | | | ¥5,000 | | | | | | | | ¥5,000 | |
| FRONT GRILLE | SET OF FRONT GRILLE | 1 | | ¥25,000 | 1 | | BLACK | HIGH | 99 | 3 DAYS | ¥1,000 | ¥20,000 | |
| | | | | | 2 | | BLACK | HIGH | 98 | 5 DAYS | ¥1,000 | ¥10,000 | |
| | | | | | 3 | | BLACK | HIGH | 98 | 5 DAYS | ¥1,000 | ¥5,000 | |
| | FRONT ORNAMENT | 1 | | ¥1,500 | 1 | | SILVER | HIGH | 98 | 3 DAYS | ¥500 | ¥1,000 | |
| | | | | | 2 | | SILVER | HIGH | 98 | 2 DAYS | ¥500 | ¥500 | |
| | | | | | 3 | | SILVER | INTERMEDIATE | 95 | 3 DAYS | ¥500 | ¥500 | |
| | TECHNICLA FEE | | | ¥5,000 | | | | | | | | ¥5,000 | |
| HEAD LAMP | HEAD LAMP ASSEMBLY | 1 | | ¥45,000 | 1 | | WHITE | ALMOST NEW | 00 | 2 DAYS | ¥1,000 | ¥20,000 | |
| | | | | | 2 | | WHITE | HIGH | 99 | 2 DAYS | ¥1,000 | ¥15,000 | |
| | | | | | 3 | | BLUE | HIGH | 98 | 3 DAYS | ¥1,000 | ¥10,000 | |
| | TECHNICLA FEE | | | ¥10,000 | | | | | | | | ¥5,000 | |
| VARIOUS EXPENDITURES | RIGHT FRONT FENDER PLATE WORKING | | | ¥8,000 | | | | | | | | | |
| REDUCTION OF PRICE | | | | ¥0 | | | | | | | | | |
| TOTAL SUM OF NEW PARTS | | | | ¥141,500 | | | SUM OF RECYCLE PARTS UTILZIED | | | | | | |

RECYCLE PARTS SELECTION SCREEN  c  d  e  f

a  b  h  j  DETERMINATION  g

## FIG. 6

☐ RECYCLE PARTS SELECTION SCREEN   c   d   e                    f   - ⊡ ✕

| REPAIR PART | NAME OF WORK | NUMERIAL QUANTITY | NEW PARTS | | RECYCLE PARTS | | | | MANUFACTURING YEAR | DELIVERY PERIOD | DELIVERY FEE | PRICE | SUM OF SELECTED PARTS |
|---|---|---|---|---|---|---|---|---|---|---|---|---|---|
| | | | CHECK | PRICE | | CHECK | COLOR | GRADE | | | | | |
| FRONT BUMPER | SET OF FRONT BUMPER | 1 | | ¥40,000 | 1 | | PEARL WHITE | ALMOST NEW | 00 | 2 DAYS | ¥1,000 | ¥40,000 | ¥41,000 |
| | | | | | 2 | | PEARL WHITE | HIGH | 99 | 3 DAYS | ¥1,000 | ¥20,000 | |
| | | | | | 3 | ✔ | PEARL WHITE | INTERMEDIATE | 95 | 2 DAYS | ¥1,000 | ¥10,000 | |
| | PAINTING (PEARL WHITE) | | | ¥10,000 | | ✔ | | | | | | ¥10,000 | ¥10,000 |
| | TECHNICLA FEE | | | ¥5,000 | | ✔ | | | | | | ¥5,000 | ¥5,000 |
| FRONT GRILLE | SET OF FRONT GRILLE | 1 | ✔ | ¥25,000 | 1 | | BLACK | HIGH | 99 | 3 DAYS | ¥1,000 | ¥20,000 | ¥25,000 |
| | | | | | 2 | | BLACK | HIGH | 98 | 5 DAYS | ¥1,000 | ¥10,000 | |
| | | | | | 3 | | BLACK | HIGH | 98 | 5 DAYS | ¥1,000 | ¥5,000 | |
| | FRONT ORNAMENT | 1 | ✔ | ¥1,500 | 1 | | SILVER | HIGH | 98 | 3 DAYS | ¥500 | ¥1,000 | ¥1,500 |
| | | | | | 2 | | SILVER | HIGH | 98 | 2 DAYS | ¥500 | ¥500 | |
| | | | | | 3 | | SILVER | INTERMEDIATE | 95 | 3 DAYS | ¥500 | ¥500 | |
| | TECHNICLA FEE | | ✔ | ¥5,000 | | | | | | | | ¥5,000 | ¥5,000 |
| HEAD LAMP | HEAD LAMP ASSEMBLY | 1 | | ¥45,000 | 1 | | WHITE | ALMOST NEW | 00 | 2 DAYS | ¥1,000 | ¥20,000 | |
| | | | | | 2 | ✔ | WHITE | HIGH | 99 | 2 DAYS | ¥1,000 | ¥15,000 | ¥15,000 |
| | | | | | 3 | | BLUE | HIGH | 98 | 3 DAYS | ¥1,000 | ¥10,000 | |
| | TECHNICLA FEE | | | ¥10,000 | | ✔ | | | | | | ¥5,000 | |
| VARIOUS EXPENDITURES | RIGHT FRONT FENDER PLATE WORKING | | | ¥8,000 | | | | | | | | | ¥8,000 |
| REDUCTION OF PRICE | | | | ¥0 | | | | | | | | ¥-1,000 | ¥-1,000 |

| TOTAL SUM OF NEW PARTS | ¥141,500 | h | SUM OF RECYCLE PARTS UTILZIED | ¥109,500 |
|---|---|---|---|---|

j~ [ DETERMINATION ] g

## FIG. 7

REQUEST FOR REPAIR — S11

↓

DESIGNATE NECESSARY PARTS — S12

↓

SEARCH FOR NEW PARTS DATA — S13

↓

SEARCH FOR RECYCLE PARTS DATA — S14

↓

DISPLAY COMPARED RESULT — S15

↓

SELECT PARTS FOR USE — S16

↓

GIVE ORDER OF PARTS FOR USE — S17

↓

REPAIR — S18

↓

DEMAND — S19

↓

PAY PACYBACK MONEY — S20

↓

PAY PRICE OF PARTS — S21

## FIG. 8

☐ RECYCLE PARTS SELECTION SCREEN ⌐c ⌐d ⌐e ⌐f ☐⬜☒

| REPAIR PART | NAME OF WORK | NUMERICAL QUANTITY | NEW PARTS | | RECYCLE PARTS | | | | | | | | SUM OF SELECTED PARTS |
|---|---|---|---|---|---|---|---|---|---|---|---|---|---|
| | | | CHECK | PRICE | | CHECK | COLOR | GRADE | MANUFACTURING YEAR | DELIVERY PERIOD | DELIVERY FEE | PRICE | |
| FRONT BUMPER | SET OF FRONT BUMPER | 1 | | ¥40,000 | 1 | | PEARL WHITE | ALMOST NEW | 00 | 2 DAYS | ¥1,000 | ¥40,000 | ¥41,000 |
| | | | | | 2 | | PEARL WHITE | HIGH | 99 | 3 DAYS | ¥1,000 | ¥20,000 | |
| | | | | | 3 | ✓ | PEARL WHITE | INTERMEDIATE | 95 | 2 DAYS | ¥1,000 | ¥10,000 | |
| | PAINTING (PEARL WHITE) | | | ¥10,000 | | ✓ | | | | | | ¥10,000 | ¥10,000 |
| | TECHNICLA FEE | | | ¥5,000 | | ✓ | | | | | | ¥5,000 | ¥5,000 |
| FRONT GRILLE | SET OF FRONT GRILLE | 1 | ✓ | ¥25,000 | 1 | | BLACK | HIGH | 99 | 3 DAYS | ¥1,000 | ¥20,000 | ¥25,000 |
| | | | | | 2 | | BLACK | HIGH | 98 | 5 DAYS | ¥1,000 | ¥10,000 | |
| | | | | | 3 | | BLACK | HIGH | 98 | 5 DAYS | ¥1,000 | ¥5,000 | |
| | FRONT ORNAMENT | 1 | ✓ | ¥1,500 | 1 | | SILVER | HIGH | 98 | 3 DAYS | ¥500 | ¥1,000 | ¥1,500 |
| | | | | | 2 | | SILVER | HIGH | 98 | 2 DAYS | ¥500 | ¥500 | |
| | | | | | 3 | | SILVER | INTERMEDIATE | 95 | 3 DAYS | ¥500 | ¥500 | |
| | TECHNICLA FEE | | ✓ | ¥5,000 | | | | | | | | ¥5,000 | ¥5,000 |
| HEAD LAMP | HEAD LAMP ASSEMBLY | 1 | | ¥45,000 | 1 | | WHITE | ALMOST NEW | 00 | 2 DAYS | ¥1,000 | ¥20,000 | |
| | | | | | 2 | ✓ | WHITE | HIGH | 99 | 2 DAYS | ¥1,000 | ¥15,000 | ¥15,000 |
| | | | | | 3 | | BLUE | HIGH | 98 | 3 DAYS | ¥1,000 | ¥10,000 | |
| | TECHNICLA FEE | | | ¥10,000 | | ✓ | | | | | | ¥5,000 | |
| VARIOUS EXPENDITURES | RIGHT FRONT FENDER PLATE WORKING | | | ¥8,000 | | | | | | | | | ¥8,000 |
| REDUCTION OF PRICE | | | | ¥0 | | | | | | | | ¥-1,000 | ¥-1,000 |
| TOTAL SUM OF NEW PARTS | | | | ¥141,500 ⌐h | | | | SUM OF RECYCLE PARTS UTILZIED | | | | | ¥109,500 |

COMPRESSION RATE | 22.6% | PAYBACK MONEY | ¥6,400 ⌐k j⌐ | DETERMINATION | g

<div align="center">

**INTERNATIONAL SEARCH REPORT**

</div>

| | International application No. |
|---|---|
| | PCT/JP01/08828 |

**A. CLASSIFICATION OF SUBJECT MATTER**
   Int.Cl$^7$  G06F17/60

According to International Patent Classification (IPC) or to both national classification and IPC

**B. FIELDS SEARCHED**

Minimum documentation searched (classification system followed by classification symbols)
   Int.Cl$^7$  G06F17/60

Documentation searched other than minimum documentation to the extent that such documents are included in the fields searched
   Jitsuyo Shinan Koho     1922-1996    Toroku Jitsuyo Shinan Koho  1994-2001
   Kokai Jitsuyo Shinan Koho  1971-2001    Jitsuyo Shinan Toroku Koho  1996-2001

Electronic data base consulted during the international search (name of data base and, where practicable, search terms used)
   JICST FILE (JOIS)
   WPI, INSPEC (DIALOG)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-250133 A (Kabushiki Kaisha System Japan),<br>17 September, 1999 (17.09.99),<br>Full text; Figs. 1 to 4  (Family: none) | 1,2,5-9<br>3,4 |
| Y | Yasuda Kasai Hoken, "Jiko-sha Shuuri 'Chuuko Buhin no Susume", Shinpin tono Sagaku Kankyou Dantai e", Nikkei Sangyo Shinbun, 07 January, 2000 (07.01.00), page 12 | 3,4 |
| A | JP 9-305644 A (Obayashi Corporation),<br>28 November, 1997 (28.11.97),<br>Par. Nos. [0134] to [0137]; Fig. 14  (Family: none) | 1-9 |
| A | JP 6-171477 A (Mazda Motor Corporation),<br>21 June, 1994 (21.06.94),<br>Full text; Figs. 1 to 45  (Family: none) | 1-9 |
| A | JP 9-160989 A (Tsubasa System K.K.),<br>20 June, 1997 (20.06.97),<br>Full text; Figs. 1 to 5  (Family: none) | 1-9 |

☒  Further documents are listed in the continuation of Box C.   ☐  See patent family annex.

| | |
|---|---|
| \*    Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>   06 November, 2001 (06.11.01) | Date of mailing of the international search report<br>   20 November, 2001 (20.11.01) |
|---|---|
| Name and mailing address of the ISA/<br>   Japanese Patent Office | Authorized officer |
| Facsimile No. | Telephone No. |

Form PCT/ISA/210 (second sheet) (July 1992)

## INTERNATIONAL SEARCH REPORT

International application No.

PCT/JP01/08828

| C (Continuation). DOCUMENTS CONSIDERED TO BE RELEVANT | | |
|---|---|---|
| Category* | Citation of document, with indication, where appropriate, of the relevant passages | Relevant to claim No. |
| A | EP 982673 A2 (Tsubasa System Co., Ltd.), 01 March, 2000 (01.03.00), Full text; Figs. 1 to 25 & JP 2000-222458 A  & CA 2280570 A1 | 1-9 |
| A | Hisashi NOGUCHI, "B2B Shinka-ron e Market Place ni Chuumoku seyo!", Computopia, Vol.35, No.409, 01 October, 2000 (01.10.00), pages 50 to 53 | 1-9 |

Form PCT/ISA/210 (continuation of second sheet) (July 1992)